# EUROPÄISCHE PATENTSCHRIFT

(11) **EP 1 244 086 B1**
(45) Veröffentlichungstag und Bekanntmachung des Hinweises auf die Patenterteilung: **24.02.2010**
(21) Anmeldenummer: 02004985.4
(22) Anmeldetag: 06.03.2002
(51) Int. Cl.: G08G 1/0968, G08G 1/0967, G01C 21/36

(54) **Vorrichtung zur Ermittlung der für einen Strassenabschnitt geltenden Verkehrszeichen**
Apparatus to transmit road indications valid on a road section
Appareil de transmission d'indications routières valables sur un tronçon

(30) Priorität: 21.03.2001 DE 10113736
(43) Veröffentlichungstag der Anmeldung: 25.09.2002
(73) Patentinhaber: Volkswagen AG, 38436 Wolfsburg (DE)
(72) Erfinder: Hallas, Ernst O., Dr., 91301 Forchheim (DE)
(74) Vertreter: Meyer, Enno

(56) Entgegenhaltungen:
- EP-A- 0 816 803
- WO-A-93/05492
- DE-A- 19 941 966
- FR-A- 2 700 047
- US-A- 5 862 510
- US-A- 5 864 305

## Beschreibung

Die Erfindung betrifft eine Vorrichtung zur Ermittlung von für einen Strassenabschnitt geltenden Verkehrszeichen mit den im Oberbegriff des Anspruches 1 angegebenen Merkmalen.

Es sind bereits Navigationssysteme bekannt, bei welchen in einem Fahrzeug nach Eingabe eines gewünschten Fahrtzieles unter Verwendung von auf einer CD-Rom gespeicherten Landkartendaten und von mittels eines GPS-Empfängers gewonnenen Fahrzeugpositionsdaten Fahrtroutendaten ermittelt werden und dem Benutzer auf einem Bildschirm angezeigt werden.

Aus WO 98/05492 A1 ist ein Verfahren zum automatischen Routenfinden, Navigieren, zur Unfallvermeidung und zum Führen eines Kraftfahrzeugs bekannt. Das Fahrzeug weist auf ein Datenverarbeitungssystem, welches basierend auf voreingestellten Kriterien als auch auf abgespeicherten Daten das Straßennetzwerk und die in jedem Punkt herrschenden Bedingungen, wie beispielsweise Verkehrszeichen, usw., identifiziert.

Aus EP 0 803 853 A1 ist ein Navigationssystem für ein Fahrzeug bekannt, welches einem Nutzer eine Fahrtstrecke anzeigt, wobei Mittel vorgesehen sind, um die aktuelle Position des Fahrzeugs zu ermitteln. Im weiteren sind Mittel vorgesehen, um die Fahrtroute anhand von vorgegebenen bzw. eingegebenen Daten zu ermitteln und dem Fahrer zur Verfügung zu stellen.

Aus DE 40 07 944 A1 ist eine Vorrichtung zur Speicherung von Verkehrszeichen bekannt. Diese Vorrichtung besteht aus einem in Sicht und Reichweite des Fahrers eines Fahrzeugs befestigten Gehäuse mit einzelnen, jeden zu speichernden Verkehrszeichen zugeordneten Anzeigemitteln, die mit von Hand betätigbaren An- und Ausschaltern verbunden sind.
Aus DE 198 52 631 A1 sind eine Vorrichtung und ein Verfahren zur Verkehrszeichenerkennung bekannt. Die Vorrichtung zur Verkehrszeichenerkennung ist mit einem digitalen Bildsensor zur Aufnahme von Bildern, die potentiellen Verkehrszeichen entsprechen, ausgestattet. Im weiteren ist eine Informationsverwaltungseinheit zur Analyse zu den von dem Bildsensor gelieferten Bildern in Echtzeit vorhanden. Es ist eine Speichereinheit sowie eine Anzeigeeinheit vorgesehen, welche die ermittelten Verkehrszeichen anzeigen. Im weiteren ist eine Informationsverarbeitungseinheit vorgesehen, welche ermittelt, ob mehrere Objekte in einem Bild enthalten sind, welche mit hinreichender Wahrscheinlichkeit Verkehrszeichen darstellen. In der Speichereinheit ist ein Klassifikator enthalten, welcher eine endgültige Identifikation eines Verkehrszeichens ermöglicht und letztendlich auf der Anzeigeeinheit die vereinfachte Darstellung des als Verkehrszeichen erkannten Objekts ausführt.

Aus DE 195 28 895 A1 ist ein autarkes, intelligentes Verkehrszeichen bekannt. Das Verkehrszeichen ist mit veränderbaren Informationen zur Beeinflussung des Strassenverkehres ausgestattet. Der Informationsaustausch erfolgt per Funkübertragung.

Aus DE 197 30 791 A1 ist ein Verfahren zur Erstellung von Warnhinweisen für Fahrer eines Kraftfahrzeuges bekannt. Hierbei erfolgt die Warnung an den Fahrer des Kraftfahrzeuges unter Auswertung der Daten von Sensoren, welche im Fahrzeug angeordnet sind, und auf Grund welcher eine Warninformation abgeben wird.

Aus DE 196 48 130 A1 ist ein Verkehrsinformationssystem bekannt. Das Verkehrsinformationssystem weist ein Messgerät zum Erfassen der Geschwindigkeit passierender Fahrzeuge auf und ist mit einem Informationssender ausgerüstet. Das Verkehrszeichen ist an einer Strasse angeordnet. Jedem Fahrzeug bzw. Verkehrsteilnehmer ist ein Empfänger zugeordnet, welchem die Daten des Verkehrszeichens beim Passieren übertragen werden. Die empfangenen Informationen werden dem Verkehrsteilnehmer zur Verfügung gestellt.

Problematisch bei all diesen bekannten Erfindungen ist jedoch, dass ein Fahrer, welcher sich in einer unbekannten Umgebung befindet, nicht sofortig über die für den von ihm aktuell befahrenen Strassenabschnitt oder den Strassenabschnitt, auf dem er sich augenblicklich befindet, gültigen Verkehrszeichen informiert ist. So ist es insbesondere bei Fahrten in der Dunkelheit für einen Fahrer häufig nicht immer sofort eindeutig möglich zu wissen, welche Höchstgeschwindigkeit und welche weiteren Verkehrsbeschränkungen für den aktuellen Strassenabschnitt gelten.

Aufgabe der Erfindung ist es, eine Vorrichtung aufzuzeigen, welche es einem Fahrer ermöglicht, jederzeit über die aktuell für den jeweiligen befahrenen Strassenabschnitt gültigen Verkehrszeichen informiert zu sein.

Diese Aufgabe wird anhand der Merkmale des Anspruchs 1 gelöst. Vorteilhafte Weiterbildungen der Erfindung sind in den abhängigen Ansprüchen, der weiteren Beschreibung sowie der zugehörigen Figuren angegeben.

Bei dem erfindungsgemässe Vorrichtung werden von einer Navigationseinheit einem Fahrer die notwendigen Informationen zur Zielführung bereitgestellt. Im weiteren ist die Navigationseinheit in der Lage, Zusatzdaten zu den zu befahrenden Strassenabschnitten zur Verfügung zu stellen. Als Zusatzdaten sind die aktuell für jeden Strassenabschnitt gültige Verkehrsbeschilderung, Verkehrsbeschränkungen und Verkehrsvorschriften abgespeichert. Einem Fahrer wird auf einem Display der Navigationseinheit sowohl die Zielführung, als auch die aktuell gültigen Verkehrszeichen angezeigt. Auf diese Weise ist der Fahrer in der Lage, sofortig, mit nur einen Blick auf das Display der Navigationseinheit die aktuell gültigen Verkehrszeichen zu kennen und über diese informiert zu sein. Außerdem wird der Fahrer erfindungsgemäß durch den ständen Update von Verkehrszeichen auch über sich verändernde Verkehrszeichen informiert. Beispielsweise existieren auf der Autobahn Nürnberg-München Verkehrszeichen, welche in Abhängigkeit des Verkehrsflusses, des Verkehrsaufkommens und von Wetterbedingungen abhängig verändert werden. Dieser Dienste-Provider ist in der Lage, diese Änderungen zu erfassen und sofortig an die Navigationseinheiten zu übertragen. Die Navigationseinheiten speichern diese neu übermittelten Daten für eine definierte Zeitdauer in ihren zugehörigen Speicher ab und weisen diesen den zugehören Strassenabschnitten zu. Auf diese Weise ist ein Fahrer stets, auch über sich ändernde Verkehrszeichen für den aktuellen Strassenabschnitt informiert, ohne stets seinen Blick auf derartige Zeichen zu halten.

Im weiteren ist vorgesehen, dass über einen Rundfunkempfänger stetig sich ändernde oder neue oder sich verändernde Verkehrszeichen für jeden Strassenabschnitt an die Navigationseinheit übertragen werden. Hierzu ist ein Dienste-Provider vorgesehen, welcher kontinuierlich die für die einzelnen Strassenabschnitte gültigen Verkehrszeichen auf einem aktuellen Stand hält und an die zugehörigen Navigationseinheiten überträgt. Auf diese Weise ist es möglich, stets über die aktuellen Verkehrszeichen, welche für einen Strassenabschnitt gelten, präsent in der Navigationseinheit vorrätig zu haben.

Im weiteren ist von besonderem Interesse, dass einem Fahrzeugführer Zusatzinformationen zu Verkehrszeichen gegeben werden können, welche ihm nicht geläufig oder gar unbekannt sind. So existieren im europäischen Raum national unterschiedliche Verkehrszeichen. Diese sind einem Fahrer nicht unbedingt immer geläufig. Ein deutscher Fahrer kennt beispielsweise nicht die Spezialvorschrift und die Sonderverkehrszeichen in Italien.

Dafür wird dem Verkehrszeichen zusätzlich, in der jeweiligen Sprache des Fahrers, eine Erklärung eines jeden Verkehrszeichens unterlegt. Die aktuell für einen Strassenabschnitt gültigen Verkehrszeichen werden auf dem Display der Navigationseinheit dargestellt. Bei dem Display handelt es sich um ein Touch-Screen-Display. Durch Berühren des Bereichs, in welchem das Verkehrszeichen dargestellt wird, wird eine Erklärung des Verkehrszeichens auf dem Display für einen voreinstellbaren Zeitraum eingeblendet. Auf diese Weise ist der Fahrer in der Lage, sich über für ihn unbekannte Verkehrszeichen zu informieren.

Die Navigationseinheit überprüft anhand der Fahrzeugdaten, wie z. B. Geschwindigkeit, ob sich ein Fahrer an die aktuell für den aktuell befahrenen Strassenabschnitt gültigen Verkehrsvorschriften hält. Überschreitet beispielsweise ein Fahrer die zulässige Höchstgeschwindigkeit in dem von ihm momentan befahrenen Strassenabschnitt, so gibt die Navigationseinheit akustisch und/oder optisch einen Warnhinweis an den Fahrer. Auf diese Weise ist der Fahrer allein durch das Navigationssystem aufmerksam gemacht, dass beispielsweise eine Geschwindigkeitsüberschreitung momentan vorliegt.

Im weiteren arbeitet dieses Verfahren auch bei Parkverstössen. Beispielsweise existiert in Österreich in lokalen ortsbezogenen Bereichen die Verkehrsvorschrift, dass bei gewissen Strassen und Strassenfahrbahnseiten nur an gewissen Tagen geparkt werden darf. Diese Verkehrsvorschrift kennt die Navigationseinheit. Parkt ein Fahrer sein Fahrzeug, so überprüft die Navigationseinheit anhand der Zusatzdaten, ob ein Parken in diesem Strassenbereich und dem aktuell gewählten Fahrbahnabschnitt möglich ist. Liegt hier ein Verstoss gegen eine Verkehrsvorschrift vor, so teilt die Navigationseinheit dies dem Fahrer mit. Auf diese Weise wird vermieden, dass ein Fahrer unbewusst einen Verstoss gegen eine Verkehrsvorschrift begeht.

Im weiteren wird die Erfindung anhand eines konkreten Ausführungsbeispiels und anhand von Figuren näher beschrieben. Die weitere Beschreibung hat lediglich beispielhaften Charakter.

Es zeigt:

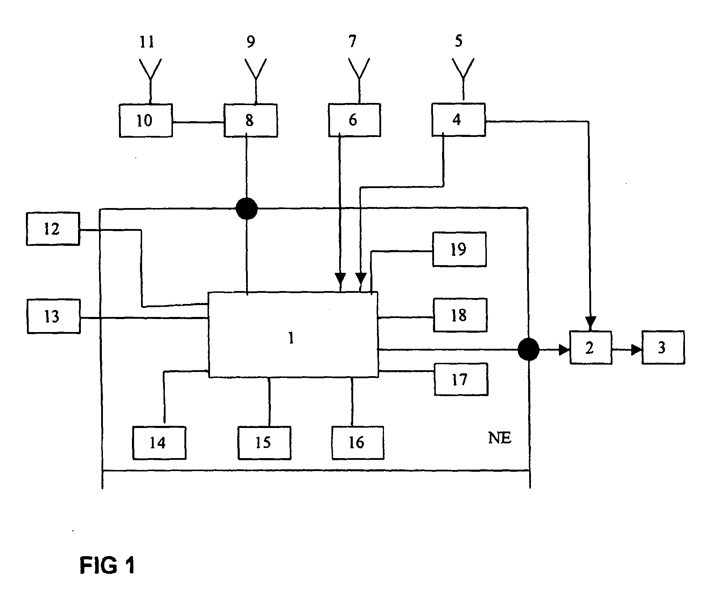

- Figur 1: den schematischen Aufbau der Navigationseinheit;
- Figur 2: den schematischen Aufbau der Darstellung auf dem Display der Navigationseinheit.

Die Navigationseinheit NE besteht aus einem Mikrocomputer 1, an welchem eine Audiowiedergabeeinheit 2 angeschlossen ist, welche wiederum mindestens an eine Lautsprechereinheit 3 angeschlossen ist. Im weiteren ist eine Rundfunksignalempfangseinheit 4 vorgesehen, welche mit dem Mikrocomputer 1 in der Navigationseinheit NE und der Audiowiedergabeeinheit 2 verbunden ist. An die Rundfunksignalempfangseinheit 4 ist eine Antenne 5 angeschlossen. Im weiteren ist eine GSM-Einheit 6 mit einer GSM-Antenne 7 vorgesehen, welche an den Mikrocomputer 1 der Navigationseinheit NE angeschlossen ist.

Im weiteren ist eine GPS-Einheit 8 nebst einer GPS-Antenne 9, sowie eine DGPS-Einheit 10 (Differential Global Position System) nebst einer DGPS-Antenne 11 vorgesehen. Die DGPS-Einheit 10 ist mit der GPS-Einheit 8 verbunden. Im weiteren besteht eine Verbindung zwischen dem Mikrocomputer 1 der Navigationseinheit NE und dem Tachometer 12 des Fahrzeuges, sowie einem Gyroskop 13. Ausserdem weist die Navigationseinheit NE ein Display 14, eine Spracheingabeeinheit 15, eine Bedieneinheit 16, einen flüchtigen Speicher 17, einen nichtflüchtigen Speicher 19 und einen Festspeicher 18 auf, welche allesamt mit dem Mikrocomputer 1 verbunden sind.

Zur Ermittlung der Fahrtroutendaten verwendet der Mikrocomputer 1 der Navigationseinheit NE die auf dem Festspeicher 18 gespeicherten Navigationsund Landkartendaten. Bei dem Festspeicher 18 handelt es sich vorzugsweise um ein CD-Rom-Laufwerk oder ein DVD-Laufwerk, in welchem sich ein entsprechender Datenträger befindet. Als besonders vorteilhaft hat sich gezeigt, ein System mit einem Datenträgerwechsler zu verwenden, da in diesem Fall die Navigationsdaten und somit die vorhandene Datenmenge grösser und erweiterbar sind.

Im Festspeicher 18 befinden sich Datenträger mit den Landkarten und Zusatzdaten für ein vordefiniertes Gebiet, beispielsweise das Gebiet der Bundesrepublik Deutschland mit den angrenzenden europäischen Nachbarstaaten. Diese Landkartendaten sind in detaillierter Form und in digitaler Form abgespeichert. Es sind die Daten für die Strassen, deren Verlauf und weitere Zusatzdaten gespeichert. Insbesondere sind weitere Informationen über das Strassennetz gespeichert, wie die Verkehrsvorschriften für jeden Strassenabschnitt. Hierbei sind insbesondere Verkehrszeichen mit Beschränkung der Höchstgeschwindigkeit, Überholverbote, Halte- und Parkverbote berücksichtigt.

Zur Fahrtroutenermittlung benötigt der Mikrocomputer 1 weiterhin die Positionsdaten des Fahrzeuges. Hierzu ist die GPS-Einheit 8 mit der zugehörigen GPS-Antenne 9 vorhanden. Die GPS-Antenne 9 empfängt von verschiedenen Satelliten abgestrahlte Signale und die GPS-Einheit 8 ermittelt hieraus die aktuelle Position und leitet diese an den Mikrocomputer 1 weiter. Den Signalen der GPS-Einheit 8 können Korrekturdaten überlagert sein, die der GPS-Einheit 8 von der DGPS-Einheit 10 zugeführt werden. Die DGPS-Einheit 10 ist mit einer Empfangsantenne 11 versehen und empfängt über diese die Korrekturdaten zu den augenblicklichen GPS-Daten. Die Korrekturdaten werden von genau vermessenen Hilfssendern ausgestrahlt. Mittels dieser Korrekturdaten können die empfangenen GPS-Daten derart verbessert werden, dass die Position des Kraftfahrzeugs bis auf eine Genauigkeit von ca. 1 m ermittelt werden kann.

Im weiteren kann die Positionsermittlung des Fahrzeugs verbessert werden, in dem der Mikrocomputer 1 die Ausgangssignale des Tachos 12 und/oder des Gyroskops 13 zugeführt werden. Durch die Berücksichtigung der vom Gyroskop 13 gelieferten Signale kann wesentlich schneller als über die GPS-Daten alleinig ein eventueller Fahrtrichtungswechsel festgestellt werden. Dies ermöglicht eine Ermittlung von Fahrtroutendaten in beschleunigter Form. Im weiteren ist durch die Einbeziehung der Geschwindigkeitsinformation des Tachos 12 und der Daten des Gyroskops 13 auch für einen kurzen Zeitraum eine Navigation möglich, auch wenn der Empfang über die GPS-Einheit 8 nicht gegeben ist. Die Daten des Tachos 12 können direkt aus der Bordsignalleitung des Kraftfahrzeugs abgeleitet werden.

Schliesslich benötigt der Mikrocomputer 1 zur Ermittlung der Fahrtroutendaten die Informationen über das jeweilige Fahrtziel. Diese werden über eine Bedieneinheit 16 eingegeben, und der Mikrocomputer 1 wertet die Eingaben von der Bedieneinheit 16 aus.
Der Mikrocomputer 1 ist derart programmiert, dass er nach Eingabe des Fahrtziels über die Bedieneinheit 16 unter Verwendung der Daten der GPS-Einheit 8, der Daten des Tachos 12, der Daten des Gyroskops 13, des Festspeichers 18 und der Daten im nicht flüchtigen bzw. im flüchtigen Speicher 19, 17 die Fahrtroute ermittelt und dem Fahrer beispielsweise akustisch über die Lautsprechereinheit 3 oder visuell auf dem Display 14, in Form von Fahrtrichtungspfeilen und/oder Landkartenansichtsdaten, den Weg zum Fahrtziel signalisiert.

In dem Festspeicher 18 sind die notwendigen Navigationsdaten bzw. Strassendaten mit Zusatzdaten gespeichert. Bei diesen Zusatzdaten handelt es sich insbesondere um die Verkehrszeichenbeschilderung. Da sich diese jedoch kontinuierlich ändert, insbesondere in Stadtgebieten und bei veränderlichen Verkehrszeichen, wertet der Mikrocomputer 1 die Fahrtrichtung bezogen auf das Fahrtziel aus. Der Mikrocomputer nimmt sodann über die GSM-Einheit 6 Verbindung mit einem Zentralrechner eines Providers auf. Dort fragt er die Verkehrszeichen ab, welche sich gegenüber den im Festspeicher 18 vorhandenen Zusatzdaten geändert oder neu hinzugekommen sind. Neu hinzugekommene Zeichen oder veränderte Verkehrszeichen bezogen auf die Fahrtstrecke und das Fahrtziel werden dann heruntergeladen und von Mikrocomputer 1 in den nicht flüchtigen Speicher 19 mit zugehörigem Datum und Versionsdatum gespeichert.

Um die Datenmenge der zu übertragenden neuen bzw. geänderten Verkehrszeichen zu minimieren, überprüft der Mikrocomputer 1 das aktuellste Versionsdatum zusammen mit weiteren Daten, welche zum Navigationszielgebiet gehören und im Festspeicher 18 bzw. im nicht flüchtigen Speicher 19 gespeichert sind und überträgt diese mit der Anfrage an den Zentralrechner. Anhand der Daten der GPS-Einheit 8 und des Versionsdatums und des Zielgebietes ermittelt der Zentralrechner diejenigen Daten, welche für die Navigation noch notwendig sind und überträgt diese zusammen mit den Zusatzdaten an den Mikrocomputer 1. Bei dieser Abfrage werden auch die auf der Fahrtstrecke sich befindenden und vorhandenen Umweltbedingungen mitübertragen. Ist beispielsweise Nebel oder Schneefall oder Regen gegeben, so können sich verschiedene Verkehrszeichen an die Verkehrssituation anpassen. Ist dies der Fall, so nimmt der Mikrocomputer 1 mehrmals auf der Fahrtstrecke Kontakt mit dem Zentralrechner auf und fragt geänderte Verkehrszeichen ab und speichert diese im Festwertspeicher 19. Ausserdem wird im flüchtigen Speicher 17 die aktuellen Daten für die Umweltbedingungen, ermittelt durch in Fahrzeug angeordnete Sensoren, gespeichert.

Auf diese Weise ist es möglich, zu jeder Fahrtstrecke die notwendigen und vorhandenen Verkehrszeichen zur Verfügung zu haben.

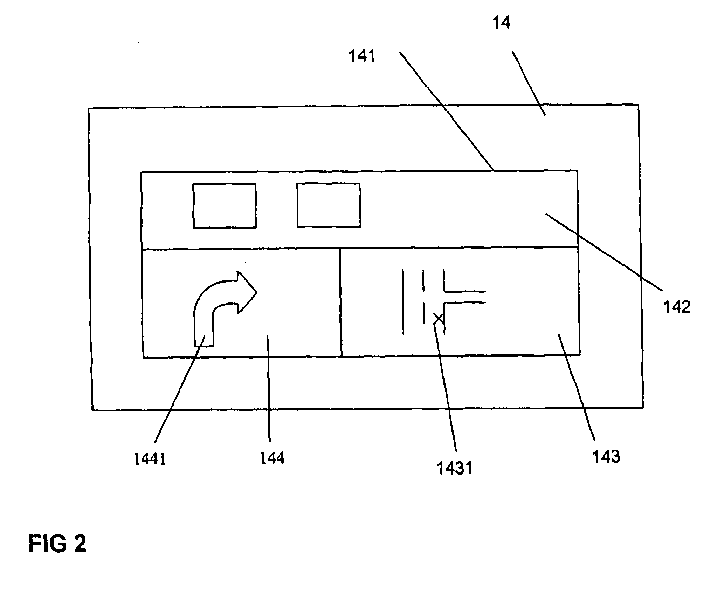

Gemäss Figur 2 werden die Daten für den Fahrer auf dem Display 14 visualisiert. Das Display 14 weist hierzu die sichtbare Fläche 141 auf. Diese teilt sich in drei Bereiche 142, 143, 144. Der erste Bereich 142 ist zur Darstellung der aktuellen Verkehrszeichen für die Fahrtstrecke vorgesehen, welche augenblicklich gültig sind. Beispielsweise werden hier die aktuell zulässige Höchstgeschwindigkeit, eventuelle Überholverbote oder auch Parkverbote-allgemein als Verkehrsbeschränkungen bezeichnet - berücksichtigt. Benötigt ein Fahrer weitere Daten hierzu, so genügt es auf das Verkehrszeichen mit dem Finger zu tippen. Bei dem Display 14 handelt es sich vorzugsweise um ein Touch-Screen-Display. Durch Berühren des entsprechenden Verkehrszeichens werden weitere Zusatzdaten, wie etwa die Dauer der Gültigkeit dieses Verkehrszeichens bezogen auf die Fahrtstrecke, z. B. Geschwindigkeitseinschränkung auf den nächsten 6 km, bzw. Zusatzinformationen über die Bedeutung des Verkehrszeichens angezeigt. Dies hat für den Fahrer den Vorteil, dass er sich zum einen über die Strecke, auf welcher das Verkehrszeichen gilt, informieren kann, sowie Verkehrszeichen, welche dem Fahrer nicht geläufig sind, mit zugehörigen Erklärungen abrufen kann.

Im weiteren überwacht der Mikrocomputer 1 anhand der Zustandsdaten des Fahrzeuges und anhand der aktuell gültigen Verkehrszeichen, ob ein Verstoss gegen eine Verkehrsvorschrift vorliegt. Ist beispielsweise die Höchstgeschwindigkeit auf 60 km/h beschränkt und ergibt der Eingangswert des Tachos 12, dass der Fahrer aktuell diese zulässige Höchstgeschwindigkeit überschreitet, so gibt der Mikrocomputer 1 einen Warnhinweis aus.
In einer weiteren vorteilhaften Ausgestaltung der Erfindung kann die Überwachung anhand eines vom Fahrer wähl- und einstellbaren Toleranzwertes erfolgen. Ein Fahrer kann folglich selbst auswählen, ab welcher Überschreitung der zulässigen Höchstgeschwindigkeit ein Warnhinweis erfolgen soll.
Dieser Warnhinweis kann in visueller Form auf dem Display 14 und/oder als akustischer Hinweis über die Lautsprechereinheit 3 ausgegeben werden. Auf diese Weise ist ein Fahrer stets gewarnt und informiert, sobald ein Verkehrsverstoss vorliegt. Insbesondere kann die Warnung nach eigenem Ermessen des Fahrers skaliert werden.

Von besonderer Bedeutung ist dies bei Parkverstössen. Stellt ein Fahrer sein Fahrzeug ab, d. h. stellt er den Motor ab, so überprüft der Mikrocomputer 1 anhand seiner GPS-Daten den aktuellen Standort. Anschliessend überprüft er die zugehörigen Verkehrszeichen, beim Abstellen des Fahrzeuges. Liegt ein Park- oder Halteverbot vor, so übermittelt er dieses sofortig an den Fahrer. Dieser ist dann sofort informiert, ob ein Verkehrsverstoss vorliegt, er kann dann ggf. sein Fahrzeug an einen weiteren Ort leiten.

In einer weiteren vorteilhaften Ausgestaltung der Erfindung wird dem Fahrer zusammen mit der Warnung über einen aktuellen Verstoss gegen eine Strassenverkehrsvorschrift die Information bereitgestellt wird, welche Folgen der Verstoss nach sich zieht. So wird beispielsweise bei einer Überschreitung der zulässigen Höchstgeschwindigkeit zugleich auf dem Display 14 die Information über das Bussgeld und die weiteren Sanktionen dargestellt, wie etwa Geldstrafe iHv. 150,-- DM, 3 Punkte und ein Monat Fahrverbot.

Im weiteren ist vorgesehen, dass über die GSM-Einheit 6 auch ein Abruf von freien Parkplätzen erfolgen kann. Hierzu übernimmt der Mikrocomputer 1 über die GSM-Einheit 6 Verbindung mit dem Zentralrechner auf und übermittelt das Fahrtziel. Der Zentralrechner ermittelt dann die freien Stellplätze auf Parkplätze und/oder in Parkhäusern in der Umgebung und übermittelt diese Daten an den Mikrocomputer 1. Dieser gibt dann an den Fahrer verschiedene Parkmöglichkeiten aus, diese können optimiert sein nach örtlicher Lage, Kosten für die Parkdauer und/oder Anbindung an öffentliche Verkehrsmittel.

Das Display 14 weist weitere Darstellungsbereiche 143 auf. Im Bereich 143 werden beispielsweise Landkarten mit dem aktuellen Standort des Fahrzeuges 1431 dargestellt. In einem weiteren Bereich des Displays 144 ist ein Richtungshinweis 1441 für den Fahrer aufgezeigt.

In einer weiteren Ausgestaltungsform ist die Anzeige der Verkehrszeichen einblendbar. Durch Betätigung des Displays 14 an einer vordefinierten Stelle, werden die aktuell gültigen Verkehrszeichen eingeblendet und der Fahrer ist stetig darüber informiert, welche aktuellen Verkehrszeichen für die Strasse im Moment gültig sind.

### Bezugszeichenliste

- NE =: Navigationseinheit
- 1 =: Mikrocomputer
- 2 =: Audiowiedergabeeinheit
- 3 =: Lautsprechereinheit
- 4 =: Rundfunksignalempfangseinheit
- 5 =: Antenne
- 6 =: GSM-Einheit
- 7 =: GSM-Antenne
- 8 =: GPS-Einheit
- 9 =: GPS-Antenne
- 10 =: DGPS-Einheit
- 11 =: DGPS-Antenne
- 12 =: Tachometer
- 13 =: Gyroskop
- 14 =: Display (Touch-Screen)
- 15 =: Spracheingabeeinheit
- 16 =: Bedieneinheit (Taste)
- 17 =: flüchtiger Speicher
- 18 =: Festspeicher
- 19 =: nicht flüchtiger Speicher

- 141, 142, 143, 144: Darstellungsbereich
- 1441: Richtungshinweis

## Patentansprüche

1. Vorrichtung zur Ermittlung der für einen Strassenabschnitt geltenden Verkehrszeichen mit einer Navigationseinrichtung (NE) und einer Standortermittlungseinrichtung (1, 8. 9, 10, 11) und mindestens einer der Navigationseinrichtung (NE) zugeordneten Speichereinheit (17, 18, 19), wobei die Navigationseinrichtung (NE) einen Mikrocomputer (1) aufweist, welcher anhand des aktuellen Standortes über die Daten der Standortermittlungseinrichtung (1, 8, 9, 10, 11) sowie den eingegebenen Zielort eine Fahrtwegberechnung durchführt und einen Fahrer anhand dieser Daten zum gewünschten Ziel führt, wobei die aktuell für einen Strassenabschnitt gültige Verkehrsbeschilderung und aktuelle Verkehrsvorschriften anhand von Zusatzdaten aus der Speichereinheit (17, 18, 19) ermittelt werden und dem Fahrer in visueller Form auf einem Display (14) zur Verfügung gestellt werden,
**dadurch gekennzeichnet, dass**
der Mikrocomputer (1) über eine GSM-Einheit (6) auf einem Zentralrechner sich ändernde Verkehrszeichen, welche auf der errechneten Route vorhanden sind, abruft und diese bei Bedarf darstellt, und
der Mikrocomputer (1) für eine definierte Zeitdauer die ändernden Verkehrszeichen in der Speichereinheit (17) bereithält.

2. Vorrichtung nach Anspruch 1, **dadurch gekennzeichnet, dass** über eine Rundfunksignalempfangseinheit (4) Daten über sich ändernde und/oder neue Verkehrszeichen für einen aktuell befahrenen oder zu befahrenden Strassenabschnitt übertragen werden und diese von der Navigationseinrichtung (NE) und dem Mikrocomputer (1) berücksichtigt werden.

3. Vorrichtung nach einem oder mehreren der vorangegangenen Ansprüche, **dadurch gekennzeichnet, dass** zu den dargestellten Verkehrszeichen Zusatzinformationen abrufbar sind und/oder die Anzeige der Zusatzinformation durch Berühren des Bereiches, auf welchem das Verkehrszeichen dargestellt ist, durchgeführt wird und/oder die Einblendung der Zusatvnformation für einen voreinstellbaren Zeitraum erfolgt.

4. Vorrichtung nach einem oder mehreren der vorangegangenen Ansprüche, **dadurch gekennzeichnet, dass** die Speichereinheit (17) ein flüchtiger Speicher ist.

5. Vorrichtung nach einem oder mehreren der vorangegangenen Ansprüche, **dadurch gekennzeichnet, dass** bei der Übertragung der Daten auch Umweltbedingungen, wie Schneefall, Nebel, Regen usw. und hieraus erfolgende Verkehrsbeschränkungen berücksichtigt werden.

6. Vorrichtung nach einem oder mehreren der vorangegangenen Ansprüche, **dadurch gekennzeichnet, dass** der Mikrocomputer (1) der Navigationseinrichtung (NE) anhand der Fahrzeugdaten Verstösse gegen die Strassenverkehrsordnung ermittelt und diesen dem Fahrer visuell oder akustisch warnt und/oder die akustische und/oder Visuelle Warnung in Abhängigkeit von einem individuell voreinstellbaren Toleranzbereich skalierbar vom Fahrer gestaltbar ist und/oder dem Fahrer zusammen mit der Warnung die Information bereitgestellt wird, welche Folgen der Verstoss gegen eine aktuell gültige Verkehrsbeschränkung nach sich zieht.

7. Vorrichtung nach einem oder mehreren der vorangegangenen Ansprüche, **dadurch gekennzeichnet, dass** die Navigationseinrichtung (NE) landesspezifische Verkehrszeichen und/oder Verkehrsvorschriften berücksichtigt.

## Claims

1. Apparatus for ascertaining the road signs valid for a road section with a navigation device (NE) and a position-finding device (1, 8, 9, 10, 11) and at least one memory unit (17, 18, 19) associated with the navigation device (NE), wherein the navigation device (NE) has a microcomputer (1) which uses the current position using the data from the position-finding device (1, 8, 9, 10, 11) and the input destination to calculate a route of travel and to guide a driver to the desired destination using these data, wherein the traffic signage currently valid for a road section and current traffic regulations are ascertained using additional data from the memory unit (17, 18, 19) and are made available to the driver in visual form on a display (14),
**characterized in that**
the microcomputer (1) uses a GSM unit (6) to retrieve changing road signs which are present on the calculated route on a central computer and shows them where needed, and
the microcomputer (1) holds the changing road signs in the memory unit (17) for a defined period.

2. Apparatus according to Claim 1, **characterized in that** a broadcast radio signal reception unit (4) is used to transmit data about changing and/or new road signs for a road section which is currently being used or to be used, and said road signs are taken into account by the navigation device (NE) and the microcomputer (1).

3. Apparatus according to one or more of the preceding claims, **characterized in that** additional information can be retrieved for the road signs shown and/or the additional information is displayed by touching the area on which the road sign is shown and/or the additional information is overlaid for a presettable period.

4. Apparatus according to one or more of the preceding claims, **characterized in that** the memory unit (17) is a volatile memory.

5. Apparatus according to one or more of the preceding claims, **characterized in that** ambient conditions such as snowfall, fog, rain, etc. and resultant traffic restrictions are also taken into account when transmitting the data.

6. Apparatus according to one or more of the preceding claims, **characterized in that** the microcomputer (1) of the navigation device (NE) uses the vehicle data to ascertain traffic offences and warns the driver of these visually or audibly and/or the audible and/or visual warning can be shaped by the driver in scalable fashion on the basis of an individually presettable tolerance range and/or the driver is provided, together with the warning, with the information regarding what consequences are entailed by the offence against a currently valid traffic restriction.

7. Apparatus according to one or more of the preceding claims, **characterized in that** the navigation device (NE) takes account of country-specific road signs and/or traffic regulations.

## Revendications

1. Dispositif pour déterminer les panneaux de signalisation applicables à une portion de route, comprenant un dispositif de navigation (NE) et un dispositif de détermination de l'emplacement (1, 8, 9, 10, 11) et au moins une unité de mémorisation (17, 18, 19) associée au dispositif de navigation (NE), le dispositif de navigation (NE) présentant un microordinateur (1) qui réalise un calcul du trajet au moyen de l'emplacement actuel par le biais des données du dispositif de détermination de l'emplacement (1, 8, 9, 10, 11) et de la destination saisie et guide un conducteur jusqu'à la destination souhaitée à l'aide de ces données, la signalisation routière applicable actuellement à une portion de route et les règles de circulation actuelles étant déterminées au moyen de données supplémentaires issues de l'unité de mémorisation (17, 18, 19) et mises à la disposition du conducteur sous forme visuelle sur un afficheur (14), **caractérisé en ce que** le microordinateur (1) interroge par le biais d'une unité GSM (6) sur un ordinateur central les panneaux de signalisation changeants qui sont présents sur le trajet calculé et les représente au besoin et le microordinateur (1) conserve les panneaux de signalisation changeants dans l'unité de mémorisation (17) pendant une durée donnée.

2. Dispositif selon la revendication 1, **caractérisé en ce que** des données sur les panneaux de signalisation changeants et/ou nouveaux pour une portion de route actuellement parcourue ou à parcourir sont transmises par le biais d'une unité de réception de signal radiodiffusé (4) et celles-ci sont prises en compte par le dispositif de navigation (NE) et le microordinateur (1).

3. Dispositif selon l'une ou plusieurs des revendications précédentes, **caractérisé en ce que** des informations supplémentaires peuvent être invoquées en plus des panneaux de signalisation affichés et/ou l'affichage des informations supplémentaires est obtenu en effleurant la zone sur laquelle est représenté le panneau de signalisation et/ou l'incrustation des informations supplémentaires a lieu pendant une période prédéfinie.

4. Dispositif selon l'une ou plusieurs des revendications précédentes, **caractérisé en ce que** l'unité de mémorisation (17) est une mémoire volatile.

5. Dispositif selon l'une ou plusieurs des revendications précédentes, **caractérisé en ce que** les conditions d'environnement telles que les chutes de neige, le brouillard, la pluie, etc. ainsi que les restrictions de la circulation qui en découlent sont également prises en compte lors de la transmission des données.

6. Dispositif selon l'une ou plusieurs des revendications précédentes, **caractérisé en ce que** le microordinateur (1) du dispositif de navigation (NE) détermine des infractions au code de la route au moyen des données du véhicule et les signale au conducteur sous forme visuelle ou sonore et/ou l'alerte sonore et/ou visuelle peut être configurée de manière à être progressive pour le conducteur en fonction d'une plage de tolérance individuelle pouvant être prédéfinie et/ou le conducteur se voit présenter conjointement avec l'alerte l'information lui précisant les conséquences que pourraient avoir une infraction aux restrictions de circulation actuellement en vigueur.

7. Dispositif selon l'une ou plusieurs des revendications précédentes, **caractérisé en ce que** le dispositif de navigation (NE) tient compte des panneaux de signalisation et/ou des règles de circulation spécifiques à un pays.
